# DEMANDE DE BREVET EUROPEEN

(11) **EP 1 130 403 A1**
(43) Date de publication de la demande: **05.09.2001**
(21) Numéro de dépôt: 01400397.4
(22) Date de dépôt: 15.02.2001
(51) Int. Cl.: G01P 1/10, G01D 1/18

(54) **Détecteur pour contrôle de rotation**

(30) Priorité: 28.02.2000 FR 0002493
(71) Demandeur: Schneider Electric Industries SA, 92500 Rueil-Malmaison (FR)
(72) Inventeur: Bernard, Jacques, 16340 I'Isle D'Espagnac (FR); Brault, Christophe, 16600 Touvres (FR)

(57) **Abrégé**

La présente invention concerne un détecteur 10 à contrôle de rotation, devant lequel passe une cible 19 dont on veut contrôler la fréquence de passage par rapport à une fréquence normale de passage, comprenant un organe capteur 11 relié à un microcontrôleur 20 qui délivre un signal de sortie binaire 15. Le détecteur 10 comporte des moyens de dialogue opérateur 30 branchés sur le microcontrôleur 20 afin de positionner le détecteur 10 en mode travail ou en mode apprentissage, lequel mode apprentissage permet au microcontrôleur 20 de mesurer la fréquence normale de passage et permet à un opérateur de sélectionner une marge de fonctionnement parmi une pluralité de marges prédéfinies, à l'aide des moyens de dialogue 30. Le microcontrôleur 20 calcule, à partir de la marge de fonctionnement sélectionnée, une fréquence de déclenchement et une fréquence de réenclenchement.

## Description

La présente invention concerne un détecteur pour contrôle de rotation comprenant des fonctions d'apprentissage de la fréquence de passage à contrôler, de sélection d'une marge de fonctionnement et de calcul d'une fréquence de déclenchement, ce type de détecteur étant susceptible d'être utilisé pour la surveillance de sous-vitesse ou de survitesse d'un mouvement de rotation, par exemple.

Les détecteurs à contrôle de rotation sont fréquemment utilisés dans de nombreuses industries pour faire du contrôle de mouvement, de glissement, de rupture de bande transporteuse, etc... Ils ont la particularité de réunir dans un même appareil des fonctions de prise d'information d'un détecteur classique grâce à un organe capteur et des fonctions simples de traitement par comptage des informations reçues par le détecteur pendant un temps donné et comparaison avec une fréquence de déclenchement préréglée sur l'appareil, de façon à délivrer en sortie un signal binaire résultat de cette comparaison. On obtient ainsi un appareil économique bien adapté pour traiter les problèmes simples de sous-vitesse ou de survitesse. Cependant, il est impératif que l'opérateur puisse régler lui-même la fréquence de déclenchement et/ou de réenclenchement de l'appareil en fonction de l'application souhaitée. Le réglage se fait généralement en utilisant la vis d'un potentiomètre monté sur l'appareil. Cette opération est assez fastidieuse si elle doit être faite avec précision car l'opérateur ne dispose pas de retour d'information sur le réglage qu'il vient d'effectuer.

Le document FR 2621119 décrit un dispositif de signalisation du dépassement d'une limite de vitesse. Ce dispositif comprend des moyens d'entrée actionnés par un opérateur dans le but de mémoriser un seuil de référence avec lequel une vitesse mesurée sera comparé. Le document EP 0843177 décrit également un dispositif de mesure de la vitesse d'un moyen de locomotion dans lequel un opérateur peut sélectionner un ou plusieurs seuils de référence. Cependant, outre le fait que ces dispositifs ne sont prévus que pour du contrôle de survitesse et pas pour du contrôle de sous-vitesse, ils ne permettent pas à un opérateur de pouvoir sélectionner des marges de fonctionnement différentes autour d'une même valeur de référence, ce qui entraîne des contraintes pour un exploitant dans le domaine industriel.

Le but de l'invention est d'une part de proposer à un opérateur une simplification du réglage du détecteur, et d'autre part de lui fournir une plus grande souplesse d'utilisation en lui laissant la possibilité de modifier rapidement la précision de l'appareil, tout en conservant une solution la plus économique possible pour un tel détecteur.

Pour cela, l'invention décrit un détecteur à contrôle de rotation, devant lequel passe une cible dont on veut contrôler la fréquence de passage par rapport à une fréquence normale de passage, comprenant un organe capteur sensible au passage de la cible, relié, par l'intermédiaire d'un étage de détection, à l'entrée d'un microcontrôleur qui délivre un signal de sortie binaire au moyen d'un étage de puissance. Ce détecteur comporte des moyens de dialogue opérateur branchés sur le microcontrôleur afin de positionner le détecteur dans un mode travail ou dans un mode apprentissage, lequel mode apprentissage permet au microcontrôleur de mesurer la fréquence normale de passage et permet de sélectionner une marge de fonctionnement du détecteur.

La marge de fonctionnement est sélectionnée par un opérateur parmi une pluralité de marges prédéfinies dans le microcontrôleur, à l'aide des moyens de dialogue. Le microcontrôleur calcule, à partir de la fréquence normale de passage mesurée et de la marge de fonctionnement sélectionnée, une fréquence de déclenchement différente de la fréquence normale de passage et calcule une fréquence de réenclenchement comprise entre la fréquence de déclenchement et la fréquence normale de passage. Pour une utilisation en contrôle de sous-vitesse, la fréquence de déclenchement est inférieure à la fréquence normale de passage, alors que pour une utilisation en contrôle de survitesse, la fréquence de déclenchement est supérieure à la fréquence normale de passage.

D'autres caractéristiques et avantages vont apparaître dans la description détaillée qui suit en se référant à un mode de réalisation donné à titre d'exemple et représenté par les dessins annexés sur lesquels :
- la figure 1 représente l'architecture interne simplifiée d'un détecteur à contrôle de rotation suivant l'invention,
- la figure 2 schématise la courbe de réponse d'un tel détecteur utilisé en contrôle de sous-vitesse,
- la figure 3 schématise la courbe de réponse d'un tel détecteur utilisé en contrôle de survitesse,
- la figure 4 schématise la courbe de réponse d'un tel détecteur utilisé simultanément en contrôle de sous-vitesse et de survitesse.

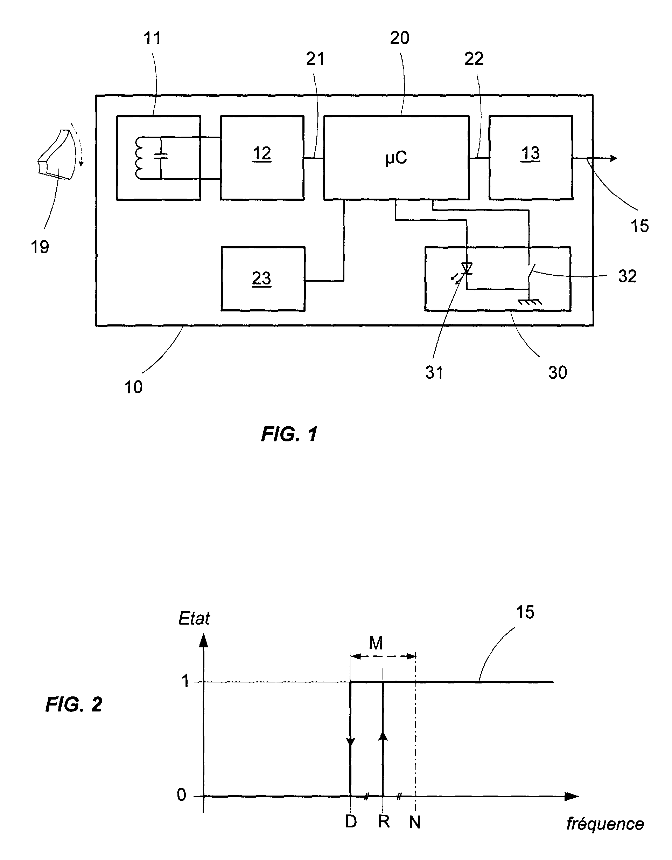

Dans la figure 1, un détecteur 10 est chargé de contrôler la fréquence de passage d'une cible 19 pour détecter une sous-vitesse et/ou une survitesse par rapport à une fréquence normale de passage. Il comprend les éléments suivants :
- un organe capteur 11 sensible au passage d'une cible 19 devant le détecteur 10, constituant ainsi la prise d'information du détecteur 10 ; cet organe capteur 11 peut être un transducteur capacitif, magnétique ou inductif, comme indiqué en figure 1, ou l'organe récepteur d'un détecteur photoélectrique ou autre,
- un étage de détection 12 relié à l'organe capteur 11, chargé d'amplifier et de mettre en forme le signal émis par l'organe capteur à destination de :
   - un microcontrôleur 20 possédant une entrée 21 raccordée à la sortie de l'étage de détection 12 et délivrant un signal de sortie binaire 22,
   - un étage de puissance 13 recevant en entrée la sortie binaire 22 du microcontrôleur, de façon à pouvoir fournir la sortie binaire 15 du détecteur 10, cette sortie binaire15 pouvant être soit à l'état 0, soit à l'état 1,
   - des moyens de stockage 23, par exemple du type mémoire EEPROM ou FLASH, raccordés ou intégrés au microcontrôleur 20,
   - des moyens de dialogue opérateur 30 raccordés sur le microcontrôleur 20.

Suivant un mode de réalisation préféré, les moyens de dialogue 30 ne sont constitués que d'une diode électroluminescente 31 pilotée par le microcontrôleur 20 et d'un bouton-poussoir 32, de façon à conserver une solution économique pour le détecteur 10.

Par ailleurs, pour ne pas augmenter la consommation électrique du détecteur 10 par rapport à un détecteur classique, il est préférable que le microcontrôleur 20 fonctionne avec une fréquence d'horloge très faible, par exemple de l'ordre de 32 KHz et une tension d'alimentation basse, par exemple de l'ordre de 3 Volts.

Le détecteur 10 possède deux modes de fonctionnement : un mode travail et un mode apprentissage. Le mode travail correspond au fonctionnement habituel du détecteur 10 dans lequel celui-ci surveille en permanence le passage d'une cible 19 devant lui et délivre un signal binaire 15 fonction de la fréquence de passage de cette cible 19. Le mode apprentissage permet d'effectuer le paramétrage du détecteur 10, c'est-à-dire permet au microcontrôleur 20 de mesurer une fréquence normale de passage N, de calculer une fréquence de déclenchement D et une fréquence de réenclenchement R à partir de la fréquence normale de passage N mesurée et d'une marge de fonctionnement sélectionnée.

Quand le mode apprentissage est activé, l'opérateur en est averti par la diode électroluminescente 31 et le détecteur 10 peut mesurer la fréquence normale de passage N qui correspond à la fréquence à laquelle la cible 19 doit passer devant le détecteur 10 durant un fonctionnement normal de l'installation. L'opérateur doit donc faire fonctionner son installation à vitesse normale de façon à ce que le détecteur puisse mesurer cette fréquence N. Quand le microcontrôleur 20 a fait l'acquisition de cette fréquence normale de passage N, il le signale à l'opérateur au moyen de la diode électroluminescente 31. Ainsi, dans le but de lui simplifier la tâche, aucun réglage direct sur le détecteur 10 n'est demandé à l'opérateur : il n'a simplement qu'à mettre son installation en fonctionnement normal pour que le détecteur 10 mesure la fréquence normale de passage N.

En mode apprentissage, l'opérateur a ensuite la possibilité de choisir lui-même une marge de fonctionnement M. Celle-ci est sélectionnée parmi une pluralité de marges prédéfinies dans la mémoire du microcontrôleur 20, différentes de la fréquence normale de passage N et correspondant à des plages d'utilisation différentes du détecteur autour d'une même fréquence normale de passage N, offrant ainsi une grande souplesse dans la précision du détecteur 10. Suivant un mode de réalisation préféré, la marge de fonctionnement est exprimée en pourcentage de la fréquence normale de passage N et on peut imaginer quatre marges prédéfinies d'une valeur égale par exemple à 5%, 10%, 20%, 30% de la fréquence normale de passage N. L'opérateur peut visualiser les différentes marges prédéfinies par défilement, chaque marge étant, par exemple, visualisée grâce à un clignotement différent de la diode électroluminescente 31. Il valide la marge de fonctionnement M qu'il a sélectionnée par une action prolongée sur le bouton-poussoir 32.

Selon une variante équivalente, le mode apprentissage peut être activé par un appui long (typiquement supérieur à cinq secondes) de l'opérateur sur le bouton-poussoir 32. Quand le microcontrôleur 20 a fait l'acquisition de la fréquence normale de passage N, il le signale à l'opérateur au moyen de la diode électroluminescente 31 et détermine par défaut la marge de fonctionnement M prédéfinie la plus large (dans l'exemple 30%) correspondant ainsi à l'utilisation la moins contraignante du détecteur 10, ce qui présente l'avantage de faciliter le démarrage de certaines applications. Pour affiner la marge de fonctionnement M, l'opérateur doit effectuer des appuis successifs (typiquement supérieurs à deux secondes pour éviter toute manoeuvre intempestive) sur le bouton-poussoir 32 afin de sélectionner une marge de fonctionnement M plus précise. Par exemple : un premier appui sélectionnera la marge prédéfinie 20% en provoquant un clignotement de la diode électroluminescente 31, puis un deuxième appui sélectionnera la marge prédéfinie 10% en provoquant deux clignotements, enfin un troisième appui sélectionnera la marge prédéfinie 5% en provoquant trois clignotements. Quand la marge de fonctionnement M prédéfinie la plus précise est sélectionnée (c'est-à-dire 5% dans l'exemple cité), tout appui sur le bouton-poussoir 32 devient inopérant sauf dans le cas d'un appui long qui redémarre alors une acquisition d'une nouvelle fréquence normale de passage N. On obtient ainsi un dialogue souple et intuitif avec l'opérateur avec des moyens de dialogue opérateur très économiques, qui lui permettent d'affiner rapidement la précision de son détecteur après la mise au point de sa machine, par exemple.

Dès que la marge de fonctionnement M est sélectionnée, le microcontrôleur calcule lui-même une fréquence de déclenchement D, fonction de la marge de fonctionnement M et de la fréquence normale de passage N. Si le détecteur 10 est utilisé en tant que détecteur de sous-vitesse, alors la fréquence de déclenchement D est inférieure à la fréquence normale de passage N et est égale à la fréquence normale de passage N diminuée de la marge de fonctionnement M sélectionnée (voir des exemples de calcul ci-après). Si le détecteur 10 est utilisé en tant que détecteur de survitesse, alors la fréquence de déclenchement D est supérieure à la fréquence normale de passage N et est égale à la fréquence normale de passage N augmentée de la marge de fonctionnement M.

Le microcontrôleur 20 calcule ensuite une fréquence de réenclenchement R, comprise entre la fréquence de déclenchement D et la fréquence normale de passage N. Suivant un mode de réalisation préféré, la fréquence de réenclenchement R se situe à mi-chemin entre la fréquence de déclenchement D et la fréquence normale de passage N. Les moyens de stockage 23 servent au microcontrôleur 20 pour mémoriser notamment la marge de fonctionnement M sélectionnée, la fréquence de déclenchement D et la fréquence de réenclenchement R.

L'opérateur n'a pas l'obligation de sélectionner lui-même une marge de fonctionnement M puisque le microcontrôleur 20 possède toujours une valeur par défaut. Cette valeur par défaut peut être soit la plus large des marges prédéfinies dans le microcontrôleur si c'est la première utilisation du détecteur 10, soit la dernière marge de fonctionnement sélectionnée lors d'un précédent apprentissage du détecteur 10 et mémorisée dans les moyens de stockage 23.

Quand la fréquence normale de passage N est mesurée et que le microcontrôleur 20 a mémorisé la marge de fonctionnement M sélectionnée, la fréquence de déclenchement D et la fréquence de réenclenchement R, alors le détecteur 10 repasse en mode travail.

En mode travail, si le détecteur 10 est utilisé en tant que détecteur de sous-vitesse comme indiqué en figure 2, il commute sa sortie binaire 15 sur un premier état (respectivement 0 ou 1) quand la fréquence de passage de la cible 19 est inférieure à la fréquence de déclenchement D et il commute sa sortie binaire 15 sur le second état (respectivement 1 ou 0) quand cette fréquence de passage est supérieure à la fréquence de réenclenchement R. Si, par exemple, l'opérateur a sélectionné une marge de fonctionnement M égale à 10%, cela signifie que le détecteur 10 commutera sa sortie binaire 15 sur le premier état quand la fréquence de passage de la cible 19 devant le détecteur 10 sera inférieure à la fréquence de déclenchement D₁ = N-10%*N c'est-à-dire : 0,9*N et le détecteur 10 commutera sa sortie binaire 15 sur le second état quand la fréquence de passage de la cible 19 devant le détecteur 10 sera supérieure à la fréquence de réenclenchement R₁ = N-(10/2)%*N, c'est-à-dire : 0,95*N.

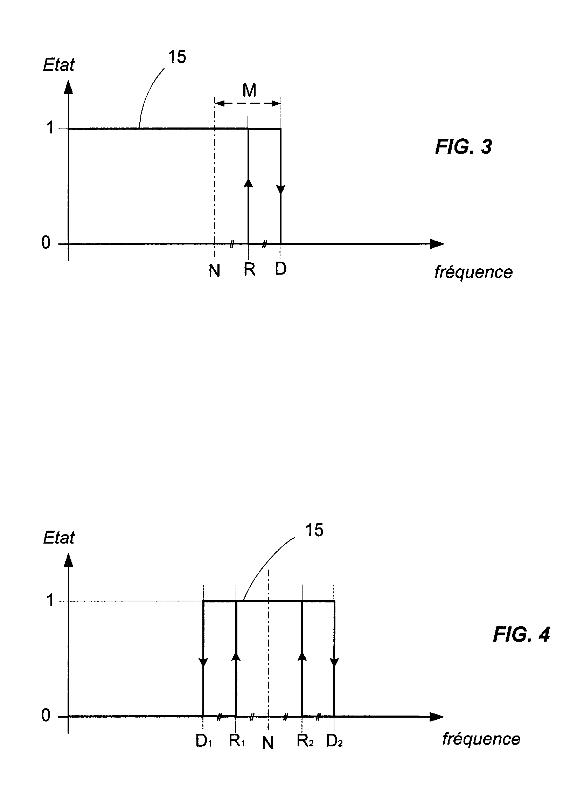

Si le détecteur 10 est utilisé en tant que détecteur de survitesse comme indiqué en figure 3, il commute sa sortie binaire 15 sur un premier état (respectivement 0 ou 1) quand la fréquence de passage de la cible 19 est supérieure à la fréquence de déclenchement D et il commute sa sortie binaire 15 sur le second état (respectivement 1 ou 0) quand cette fréquence de passage est inférieure à la fréquence de réenclenchement R. Si, par exemple, l'opérateur a sélectionné une marge de fonctionnement M égale à 10%, cela signifie que le détecteur 10 commutera sa sortie binaire 15 sur le premier état quand la fréquence de passage de la cible 19 devant le détecteur 10 sera supérieure à la fréquence de déclenchement D₂ = N+10%*N, c'est-à-dire : 1,1*N et le détecteur 10 commutera sa sortie binaire 15 sur le second état quand la fréquence de passage de la cible 19 devant le détecteur 10 sera inférieure à la fréquence de réenclenchement R₂ = N+(10/2)%*N, c'est-à-dire : 1,05*N.

Il est possible d'envisager un détecteur 10 fonctionnant simultanément en tant que détecteur de sous-vitesse et en tant que détecteur de survitesse, comme indiqué en figure 4. Dans ce cas, à partir de la marge de fonctionnement M sélectionnée, le microcontrôleur 20 utilise les deux fréquences de déclenchement D₁ et D₂ symétriques par rapport à la fréquence normale N, D₂ étant supérieure à D₁. Le fonctionnement est alors le suivant : le détecteur 10 commute sa sortie binaire 15 sur un premier état (respectivement 0 ou 1) quand la fréquence de passage de la cible 19 sera supérieure à la fréquence de déclenchement D₂ ou sera inférieure à la fréquence de déclenchement D₁. Le détecteur 10 commute sa sortie binaire 15 sur le second état (respectivement 1 ou 0) quand la fréquence de passage de la cible 19 sera inférieure à la fréquence de réenclenchement R₂ et supérieure à la fréquence de réenclenchement R₁.

Il est bien entendu que l'on peut, sans sortir du cadre de l'invention, imaginer d'autres variantes et perfectionnements de détail et de même envisager l'emploi de moyens équivalents.

## Revendications

1. Détecteur à contrôle de rotation, devant lequel passe une cible (19) dont on veut contrôler la fréquence de passage par rapport à une fréquence normale de passage (N), comprenant un organe capteur (11) sensible au passage d'une cible (19), relié, par l'intermédiaire d'un étage de détection (12), à l'entrée (21) d'un microcontrôleur (20) lequel délivre, au moyen d'un étage de puissance (13), un signal de sortie binaire (15) pouvant prendre un état 0 ou un état 1, caractérisé par le fait que le détecteur (10) comporte des moyens de dialogue opérateur (30) branchés sur le microcontrôleur (20) afin de positionner le détecteur (10) en mode travail ou en mode apprentissage, lequel mode apprentissage permet au microcontrôleur (20) de mesurer la fréquence normale de passage (N) et permet de sélectionner une marge de fonctionnement (M) du détecteur (10).

2. Détecteur à contrôle de rotation selon la revendication 1, caractérisé par le fait que la marge de fonctionnement (M) est sélectionnée par un opérateur parmi une pluralité de marges prédéfinies dans le microcontrôleur (20), à l'aide des moyens de dialogue (30).

3. Détecteur à contrôle de rotation selon la revendication 2, caractérisé par le fait que le microcontrôleur (20) calcule, à partir de la fréquence normale de passage (N) mesurée et de la marge de fonctionnement (M) sélectionnée, une fréquence de déclenchement (D) différente de la fréquence normale de passage (N).

4. Détecteur à contrôle de rotation selon la revendication 3, caractérisé par le fait que le microcontrôleur (20) calcule une fréquence de réenclenchement (R) comprise entre la fréquence de déclenchement (D) et la fréquence normale de passage (N).

5. Détecteur à contrôle de rotation selon la revendication 4, caractérisé par le fait que la fréquence de réenclenchement (R) se situe à mi-chemin entre la fréquence de déclenchement (D) et la fréquence normale de passage (N).

6. Détecteur à contrôle de rotation selon la revendication 4, caractérisé par le fait que, pour une utilisation en contrôle de sous-vitesse, la fréquence de déclenchement (D) est inférieure à la fréquence normale de passage (N).

7. Détecteur à contrôle de rotation selon la revendication 6, caractérisé par le fait que, en mode travail, le détecteur (10) surveille en permanence le passage d'une cible (19), commute sa sortie binaire (15) sur un premier état (respectivement 0 ou 1) quand la fréquence de passage de la cible (19) est inférieure à la fréquence de déclenchement (D) et commute sa sortie binaire (15) sur le second état (respectivement 1 ou 0) quand cette fréquence de passage est supérieure à la fréquence de réenclenchement (R).

8. Détecteur à contrôle de rotation selon la revendication 4, caractérisé par le fait que, pour une utilisation en contrôle de survitesse, la fréquence de déclenchement (D) est supérieure à la fréquence normale de passage (N).

9. Détecteur à contrôle de rotation selon la revendication 8, caractérisé par le fait que, en mode travail, le détecteur (10) surveille en permanence le passage d'une cible (19), commute sa sortie binaire (15) sur un premier état (respectivement 0 ou 1) quand la fréquence de passage de la cible (19) est supérieure à la fréquence de déclenchement (D) et commute sa sortie binaire (15) sur le second état (respectivement 1 ou 0) quand cette fréquence de passage est inférieure à la fréquence de réenclenchement (R).

10. Détecteur à contrôle de rotation selon la revendication 4, caractérisé par le fait que le détecteur (10) comporte également des moyens de stockage (23) servant à mémoriser notamment la marge de fonctionnement (M) sélectionnée, la fréquence de déclenchement (D) et la fréquence de réenclenchement (R).

11. Détecteur à contrôle de rotation selon l'une des revendications précédentes, caractérisé par le fait que les moyens de dialogue (30) sont constitués d'un bouton-poussoir (32) et d'une diode électroluminescente (31) montés directement sur le détecteur (10).
